# EUROPEAN PATENT SPECIFICATION

(11) **EP 4 450 949 B1**
(45) Date of publication and mention of the grant of the patent: **09.12.2026**
(21) Application number: 22906940.6
(22) Date of filing: 06.09.2022
(51) Int. Cl.: G01M 17/02, B60C 19/00, B60W 60/00, G01M 17/007

(54) **TIRE EVALUATION METHOD AND TIRE EVALUATION DEVICE**
REIFENBEURTEILUNGSVERFAHREN UND REIFENBEURTEILUNGSVORRICHTUNG
PROCÉDÉ D'ÉVALUATION DE PNEU ET DISPOSITIF D'ÉVALUATION DE PNEU

(30) Priority: 13.12.2021 JP 2021202046
(43) Date of publication of application: 23.10.2024
(73) Proprietor: BRIDGESTONE CORPORATION, Chuo-ku Tokyo 104-8340 (JP)
(72) Inventor: MORI, Ryosuke, Tokyo 104-8340 (JP); CHIBA, Kazuki, Tokyo 104-8340 (JP)
(74) Representative: Marks & Clerk LLP
(86) International application number: PCT/JP2022/033477
(87) International publication number: WO 2023/112404

(56) References cited:
- EP-A1- 1 460 409
- CN-A- 113 778 045
- JP-A- 2003 322 592
- JP-A- 2006 200 996
- JP-A- 2020 012 711
- US-A- 4 969 212
- US-A1- 2021 272 398
- US-B2- 10 586 407

## Description

### TECHNICAL FIELD

The present disclosure relates to a tire evaluation method and a tire evaluation apparatus.

### BACKGROUND

In recent years, progress has been made in the development of technology related to autonomous driving. Generally, in autonomous driving, a reference path for the course to be driven is fixed. The path deviates from the reference path during actual driving. Control is therefore performed to estimate and correct the position of the vehicle using sensors and the like. For example, Patent Literature (PTL) 1 discloses control that sets path points according to a driving mode based on factors such as the driving time slot and amount of traffic. Attention is drawn to the disclosure of US2021/272398A1.

### CITATION LIST

### Patent Literature

PTL 1: JP 2019-174304 A

### SUMMARY

### (Technical Problem)

Here, an actual vehicle testing method is known as a tire testing method. In an actual vehicle testing method, various tests are conducted while a vehicle is actually driven around a test course. In the actual vehicle testing method as well, autonomous driving is performed so that the vehicle passes through the reference path of the circuit course. In such an actual vehicle testing method, the degree of agreement between the reference path and the travel path of the vehicle can be used to evaluate the control of the vehicle. However, the matching between the vehicle to be controlled and the tires (tire followability) cannot be strictly evaluated only from the consistency between the reference path and the travel path of the vehicle. Therefore, demand exists for a method that can evaluate how the tires are moving as the vehicle is controlled.

In light of these circumstances, it is an aim of the present disclosure to provide a tire evaluation method and a tire evaluation apparatus capable of evaluating the followability of tires relative to vehicle control.

### (Solution to Problem)

A tire evaluation method according to the present invention is provided as claimed in claim 1.

A tire evaluation apparatus according to the present invention is provided as claimed in claim 6.

### (Advantageous Effect)

According to the present disclosure, a tire evaluation method and a tire evaluation apparatus capable of evaluating the followability of tires relative to vehicle control can be provided.

### BRIEF DESCRIPTION OF THE DRAWINGS

In the accompanying drawings:
FIG. 1 is a block diagram illustrating an example configuration of a tire evaluation system including a tire evaluation apparatus according to an embodiment of the present disclosure;
FIG. 2 is a plan view of an example course on which the vehicle illustrated in FIG. 1 drives;
FIG. 3 is a diagram illustrating a reference path and a travel path of a vehicle on the course in FIG. 2;
FIG. 4 is a diagram illustrating a forward fixation model;
FIG. 5 is a diagram illustrating a specific region in a target path;
FIG. 6 is a diagram illustrating a travel path of a vehicle and a specific region in a target path on the course in FIG. 2; and
FIG. 7 is a flowchart illustrating an example of processing in a tire evaluation method according to an embodiment of the present disclosure.

### DETAILED DESCRIPTION

A tire evaluation method and a tire evaluation apparatus according to an embodiment of the present disclosure are described below with reference to the drawings. Parts in the drawings that are the same or correspond are allotted the same reference signs. In the explanation of the present embodiment, a description of identical or equivalent portions is omitted or simplified as appropriate.

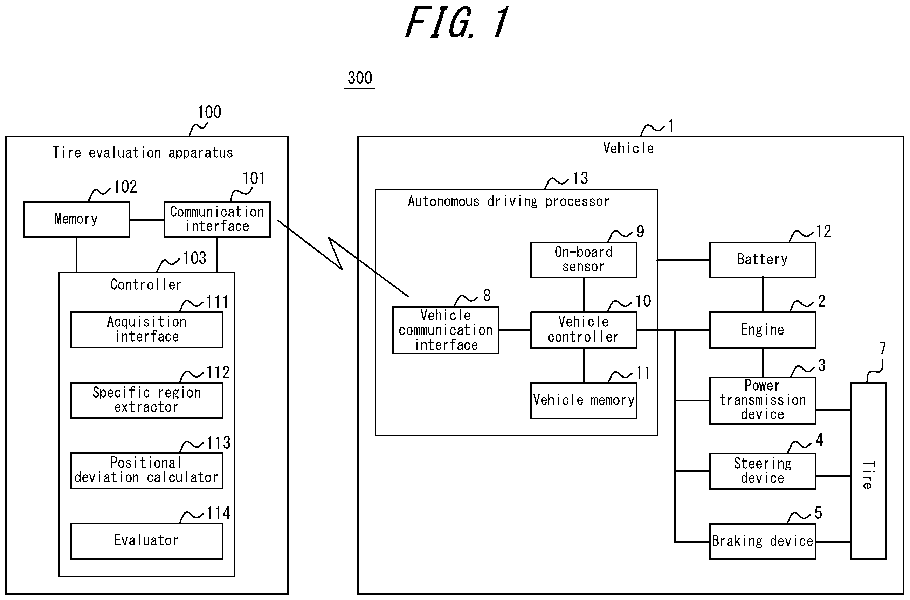

FIG. 1 is a block diagram illustrating an example configuration of a tire evaluation system 300 including a tire evaluation apparatus 100 according to an embodiment of the present disclosure. The tire evaluation system 300 includes a vehicle 1 having tires 7 mounted thereon and a tire evaluation apparatus 100 that evaluates the control followability of the tires 7 with respect to the vehicle 1. In the present embodiment, the tire evaluation system 300 is described as including one vehicle 1, but the tire evaluation system 300 may include a plurality of vehicles 1. In a case in which the tire evaluation system 300 includes a plurality of vehicles 1, the tire evaluation apparatus 100 may evaluate the tires 7 mounted on each of the vehicles 1.

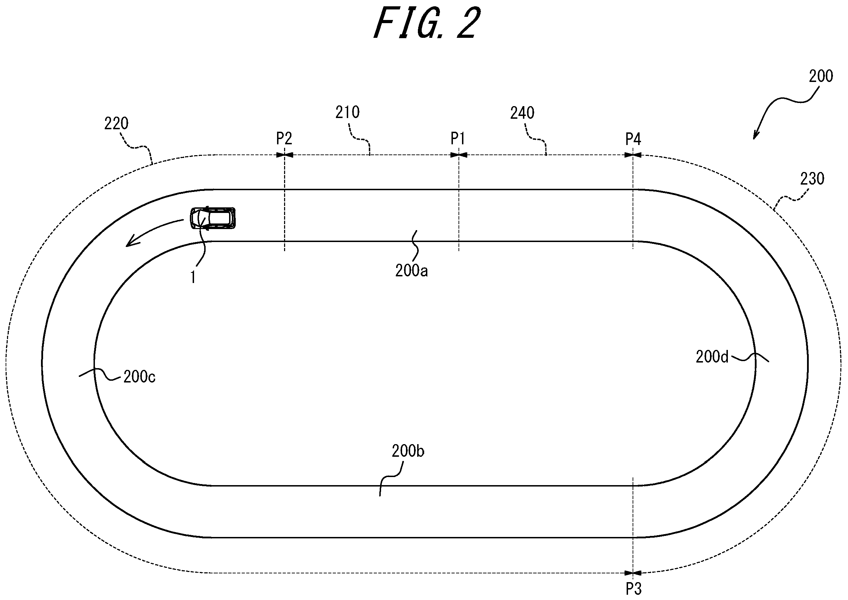

First, the configuration of the vehicle 1 is described. The vehicle 1 includes an autonomous driving function and drives autonomously on a course 200 illustrated in FIG. 2. The details of the course 200 are described below.

As illustrated in FIG. 1, the vehicle 1 includes an engine 2, a power transmission device 3, a steering device 4, a braking device 5, tires 7, a battery 12, and an autonomous driving processor 13. The autonomous driving processor 13 includes a vehicle communication interface 8, an on-board sensor 9, a vehicle controller 10, and a vehicle memory 11. The autonomous driving processor 13 provides an autonomous driving function for the vehicle 1. The configuration of the autonomous driving processor 13 is not limited to the configuration illustrated in FIG. 1 and may include various configurations to provide the autonomous driving function of the vehicle 1.

The engine 2 is the power source that drives the vehicle 1. The engine 2 is started by electric power supplied from the battery 12. The vehicle 1 may include a motor instead of the engine 2 as a power source. The vehicle 1 may include both the engine 2 and a motor as a power source.

The power transmission device 3 transmits the power generated by the engine 2 to the tires 7. The power transmission device 3 includes a transmission or the like.

The steering device 4 is a steering wheel and controls the steering angle of the tires 7.

The braking device 5 brakes the tires 7. The braking device 5 includes brakes or the like.

The battery 12 is, for example, a secondary battery such as a lead-acid battery or a lithium-ion battery. The battery 12 supplies power to the power source, such as the engine 2, of the vehicle 1. The battery 12 may also supply power to various electrical devices or electronic devices installed in the vehicle 1, including the autonomous driving processor 13.

The vehicle communication interface 8 includes a communication module capable of wireless communication. The vehicle communication interface 8 may include a communication module corresponding to mobile communication standards, such as 4G (4^{th} Generation) and 5G (5^{th} Generation). The vehicle communication interface 8 may communicate with fixed point sensors or the like that are installed around the course 200 and detect information about the course 200. The information about the course 200 may include information about conditions on the course 200 (for example, the presence or absence of objects such as other vehicles or obstacles). The fixed point sensor may, for example, be a 3D-LiDAR (Light Detection and Ranging) sensor that emits electromagnetic waves, such as infrared rays or millimeter waves, and detects the reflected waves of the electromagnetic waves reflected by surrounding objects, thereby detecting the surrounding objects and the distance to the surrounding objects in three dimensions. The vehicle communication interface 8 may output the received information about the course 200 to the vehicle controller 10.

The vehicle communication interface 8 includes a communication module capable of wireless communication with external apparatuses including the tire evaluation apparatus 100. In the present embodiment, the vehicle communication interface 8 performs wireless communication with the tire evaluation apparatus 100. The vehicle communication interface 8 may perform wired communication with on-board devices in a case in which on-board devices are mounted in the vehicle 1. The external apparatuses may, for example, include a server apparatus, a Personal Computer (PC), a tablet terminal, and the like. Data may, however, be moved to the external apparatuses without communication.

The vehicle communication interface 8 also outputs, at least to the tire evaluation apparatus 100, travel data on the vehicle 1 traveling on the course 200. The travel data includes "travel state data" including the speed and acceleration of the vehicle 1, "travel path data", and "target path data". Details of the travel path and target path are described below.

The on-board sensor 9 detects information about the vehicle 1. In the present embodiment, the information detected by the on-board sensor 9 includes the position, speed, and acceleration of the vehicle 1. The information detected by the on-board sensor 9 may further include information about the conditions around the vehicle 1. The on-board sensor 9 may acquire information from various meters mounted on the vehicle 1, such as a speedometer, a tachometer, a fuel meter, or an odometer. The on-board sensor 9 may include a Global Positioning System (GPS) sensor that detects the position of the vehicle 1 using a positioning system such as GPS. The on-board sensor 9 may include a speed sensor and an accelerometer that detect the speed and acceleration of the vehicle 1 using GPS. The on-board sensor 9 may include a camera, such as a monochrome camera or a stereo camera, that captures images of the area around the vehicle 1. The on-board sensor 9 may include a LiDAR sensor. The on-board sensor 9 may output the detected information about the vehicle 1 to the vehicle controller 10.

The vehicle controller 10 includes one or more processors. The processor may be a general purpose processor such as a Central Processing Unit (CPU) or a dedicated processor specialized for specific processing. The vehicle controller 10 may include one or more dedicated circuits. In the vehicle controller 10, the one or more processors may be replaced by one or more dedicated circuits. For example, a Field-Programmable Gate Array (FPGA) or Application Specific Integrated Circuit (ASIC) may be used as the dedicated circuit.

The vehicle controller 10 controls the behavior of the vehicle 1 for autonomous driving by controlling the engine 2, the power transmission device 3, the steering device 4, and the braking device 5. The autonomous driving level may, for example, be from level 3 to 5 as defined by the Society of Automotive Engineering (SAE).

The vehicle controller 10 acquires detection results from the on-board sensor 9 and all or some of the fixed point sensors and detects the position of the vehicle 1 and obstacles around the vehicle 1 based on the acquired detection results. The vehicle controller 10 controls the driving of the vehicle 1 based on the detection results of the position of the vehicle 1 and the obstacles around the vehicle 1.

The vehicle memory 11 includes one or more memories. The memory can, for example, be a semiconductor memory, a magnetic memory, or an optical memory, but is not limited to these examples and can be any memory. The vehicle memory 11 is accessed by the vehicle controller 10 via any interface but can also be configured to be built into the vehicle controller 10, for example. The vehicle memory 11 may store travel data of the vehicle 1 that is outputted to the tire evaluation apparatus 100, for example.

Next, the configuration of the tire evaluation apparatus 100 is described. As illustrated in FIG. 1, the tire evaluation apparatus 100 includes a communication interface 101, a memory 102, and a controller 103. The controller 103 includes an acquisition interface 111, a specific region extractor 112, a positional deviation calculator 113, and an evaluator 114. The configuration of the tire evaluation apparatus 100 is not limited to the configuration illustrated in FIG. 1 and may include various configurations for evaluating the control followability of the tires 7 with respect to the vehicle 1.

The communication interface 101 includes a communication module capable of wireless communication. The communication interface 101 may include a communication module corresponding to mobile communication standards, such as 4G and 5G. The communication interface 101 receives the aforementioned travel data from the vehicle 1. The communication interface 101 may output the travel data to the controller 103 or store the data in the memory 102 according to a control signal from the controller 103.

The memory 102 includes one or more memories. The memory can, for example, be a semiconductor memory, a magnetic memory, or an optical memory, but is not limited to these examples and can be any memory. The memory 102 is accessed by the controller 103 via any interface but can also be configured to be built into the controller 103, for example.

The controller 103 includes one or more processors. The processors can, for example, be a general purpose processor or dedicated processor specialized for specific processing, but these examples are not limiting, and any processor may be used. The controller controls the overall operations of the tire evaluation apparatus 100.

Here, the tire evaluation apparatus 100 may have the following software configuration. One or more programs used to control the operations of the tire evaluation apparatus 100 are stored in the memory 102. When read by the processor of the controller 103, the programs stored in the memory 102 cause the controller 103 to function as the acquisition interface 111, the specific region extractor 112, the positional deviation calculator 113, and the evaluator 114.

The acquisition interface 111 acquires data on a travel path of the vehicle 1 and data on a target path set during travel so that the vehicle 1 passes through the reference path. The reference path is a reference path in the course 200 according to a driving scenario for the vehicle 1. The target path is a path, set at predetermined timings, for modifying the travel of the vehicle 1 so that the vehicle 1 travels along the reference path. The predetermined timings may, for example, be at certain intervals, or may occur when the deviation from the reference path becomes greater than a threshold. In the present embodiment, the acquisition interface 111 acquires travel data, including travel path data and target path data, from the vehicle 1. As described above, the travel data further includes travel state data, which includes the speed and acceleration of the vehicle 1.

The specific region extractor 112 extracts a specific region from the target path data acquired by the acquisition interface 111. As described in detail below, the specific region is a region that better indicates the followability of the tires 7 compared to other regions of the target path.

The positional deviation calculator 113 calculates the positional deviation between the specific region extracted by the specific region extractor 112 and the travel path of the vehicle 1.

The evaluator 114 evaluates the control followability of the tires 7 with respect to the vehicle 1 based on the positional deviation calculated by the positional deviation calculator 113. As the positional deviation is smaller, the control followability of the tires 7 with respect to the vehicle 1 can be evaluated higher.

As described above, the vehicle 1 is controlled by the autonomous driving function to drive autonomously on the course 200. The course 200 is, for example, a circuit course for testing the tires 7. FIG. 2 is a plan view of an example of the course 200 on which the vehicle 1 drives to test the tires 7.

As illustrated in FIG. 2, the course 200 is a closed circuit course comprising two straight tracks 200a, 200b extending parallel to each other, and semicircular curved tracks 200c, 200d disposed at the ends of the straight tracks 200a, 200b and connected so as to join the ends of both straight tracks 200a, 200b. The vehicle 1 drives around the course 200, which is a circuit, in a predetermined direction. In the example in FIG. 2, the predetermined direction is counterclockwise.

The course 200 is divided into a plurality of sections. For example, the course 200 includes a test section 210 that has a position P1 as a starting point and a position P2 as an ending point. The position P1 and the position P2 are included in the straight track 200a. Therefore, the test section 210 is a straight section. The test section 210 is a section for performing various measurements related to testing of the tires 7. In the test section 210, tests other than followability of the tires 7 may be performed. For example, the road surface in the test section 210 may be a road surface based on the ISO 10844 standard, and a pass-by noise test may also be performed.

The course 200 further includes an adjustment section 220, a banked section 230, and an acceleration section 240.

The adjustment section 220 has the position P2 as a starting point and a position P3 as an ending point. The position P3 is the position where the straight track 200b and the curved track 200d are connected. The adjustment section 220 includes a section of the straight track 200a after the test section 210, the curved track 220c, and the straight track 200b. That is, the adjustment section 220 is a section connected to the ending point of the test section 210 and the starting point of the banked section 230, described below. In the adjustment section 220, the vehicle 1 is permitted to overtake and be overtaken by other vehicles.

The banked section 230 has the position P3 as a starting point and a position P4 as an ending point. The position P4 is the position where the straight track 200a and the curved track 200d are connected. In the banked section 230, for example, an inclination such that the road surface slopes upward from the inner periphery of the curve to the outer periphery is provided. That is, the course 200 includes the banked section 230, which has a curved shape and in which the road surface is inclined so as to slope upward from the inner periphery of the curve to the outer periphery. As a result of this inclination, the vehicle 1 travels on the outside of the semicircular corner in the banked section 230 and maintains a constant speed (such as 60 km/h) by using centrifugal force.

The acceleration section 240 has the position P4 as a starting point and the position P1 as an ending point. That is, the acceleration section 240 is a section connected to the starting point (position P1) of the test section 210. In the acceleration section 240, the vehicle controller 10 accelerates the vehicle 1 at a predetermined acceleration rate, for example, to the speed required upon entering the test section 210.

Next, the control of the behavior of the vehicle 1 by the vehicle controller 10 is described.

The vehicle controller 10 detects the speed and position of the vehicle 1 based on the detection results of the on-board sensor 9 and the fixed point sensors. The vehicle controller 10 controls the behavior of the vehicle 1 so that the detected speed and position of the vehicle 1 follow a driving scenario that defines the travel speed and travel path of the vehicle 1 in the test of the tires 7.

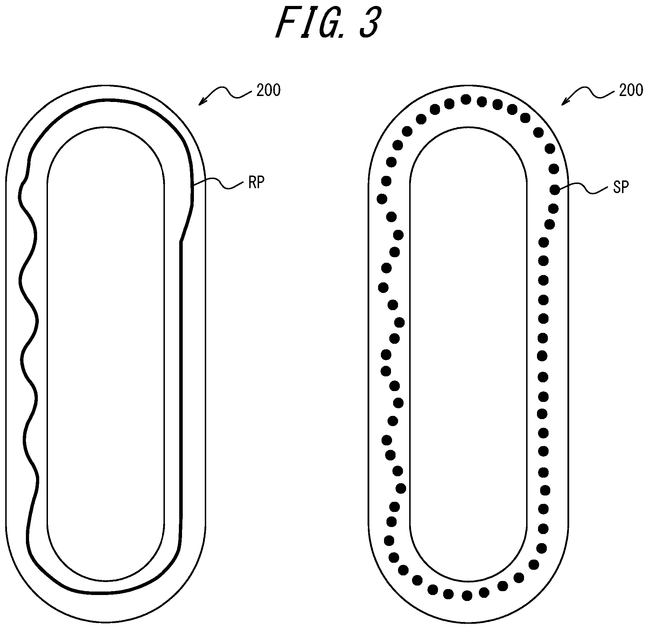

FIG. 3 is a diagram illustrating a reference path RP and a travel path SP of the vehicle 1 on the course 200. The travel path SP is the path actually traveled by the vehicle 1 and is obtained by mapping the position of the vehicle 1 detected by the on-board sensor 9 onto map information for the course 200. Since the on-board sensor 9 detects the position of the vehicle 1 at regular time intervals, the positions of the vehicle 1 that form the travel path SP are indicated discretely. The vehicle controller 10 controls the travel of the vehicle 1 so that the travel path SP matches the reference path RP.

Specifically, the vehicle controller 10 calculates a control value for the steering angle of the vehicle 1, so that the position of the vehicle 1 follows the reference path (i.e., reference path RP) specified in the driving scenario, and controls the steering angle of the vehicle 1 according to the calculated control value. The vehicle controller 10 also calculates a control value for controlling the acceleration/deceleration of the vehicle 1, so that the speed of the vehicle 1 follows the target travel speed specified in the travel scenario, and controls the acceleration/deceleration of the vehicle 1 according to the calculated control value.

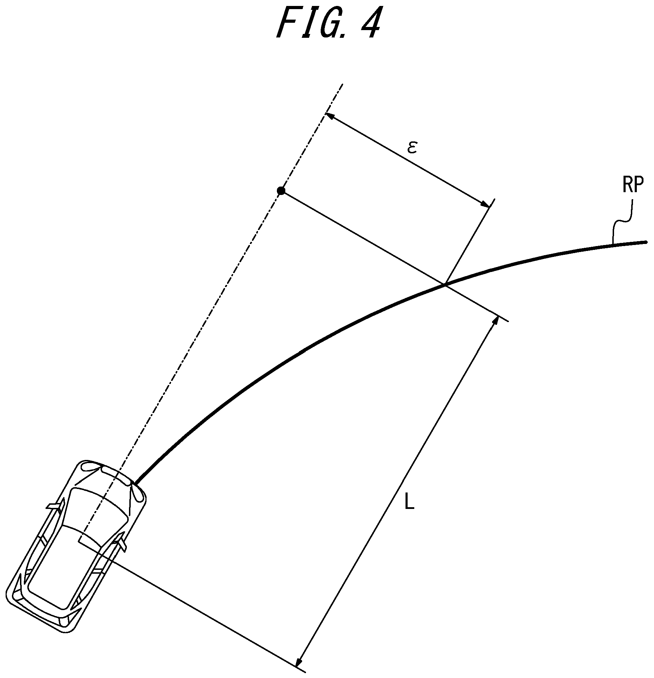

The method by which the vehicle controller 10 calculates the control value of the steering angle is not particularly limited, but a forward fixation model, for example, may be used. FIG. 4 is a diagram illustrating a forward fixation model. In the forward fixation model, a point that is a predetermined distance (L in FIG. 4) away from the current position of the vehicle 1 in the travel direction of the vehicle 1 is taken as a fixation point, and the steering angle is controlled based on the lateral deviation (ε in FIG. 4) between this fixation point and the reference path RP. The vehicle controller 10 controls the steering angle by performing calculations using the forward fixation model at predetermined time intervals, for example. For example, when the vehicle 1 is traveling at 60 km/h, the predetermined time interval may be set to less than 1 second, for example 0.5 seconds. The vehicle controller 10 may adjust the predetermined time interval according to the speed of the vehicle 1. For example, the predetermined time interval may be adjusted to be shorter when the speed of the vehicle 1 exceeds 60 km/h. The predetermined time interval may also be linked to the timing at which the on-board sensor 9 detects the position of the vehicle 1, as in the present embodiment. At predetermined time intervals, the vehicle controller 10 thus controls the steering angle and the like so that the vehicle 1 passes through the reference path RP. The path of the vehicle 1 that is set towards the reference path RP by this control is the target path.

Here, the control performed by the vehicle controller 10 can be evaluated based on the degree to which the travel path SP of the vehicle 1 whose steering angle and acceleration/deceleration are controlled by the vehicle controller 10 matches the reference path RP. However, the matching between the controlled vehicle 1 and the tires 7 (the followability of the tires 7) cannot be strictly evaluated only from the consistency between the traveling path SP of the vehicle 1 and the reference path RP. Here, as described above, the target path is set based on the control of steering angle and the like by the vehicle controller 10. The tire evaluation apparatus 100 according to the present embodiment evaluates the control followability of the tires 7 with respect to the vehicle 1 by evaluating how the tires 7 are moving with respect to the target path.

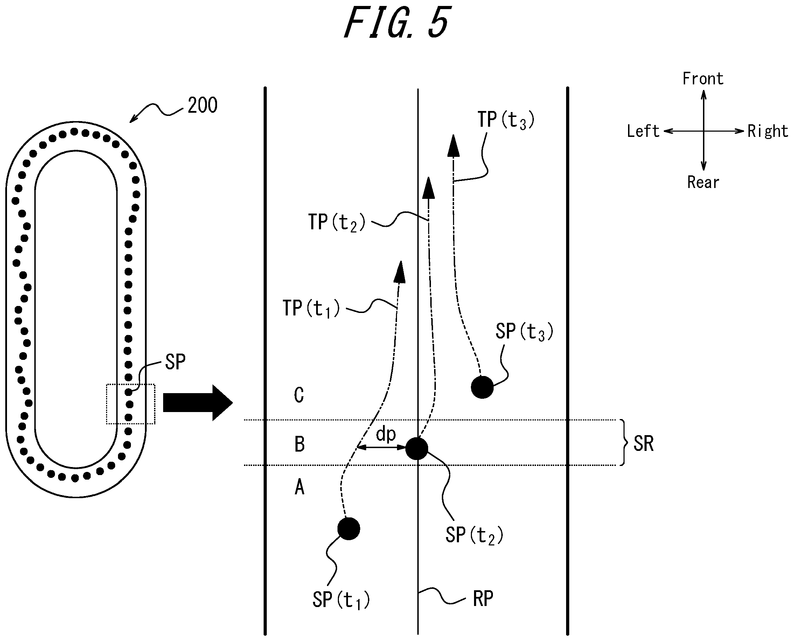

FIG. 5 is a diagram illustrating a specific region SR in a target path TP. First, the left side in FIG. 5 illustrates the travel path SP of the vehicle 1 on the course 200. A portion thereof is enlarged on the right side to illustrate the target path TP at times t₁, t₂, and t₃. Time t₂ is the time after the predetermined time interval has elapsed from time t₁. Time t₃ is the time after the predetermined time interval has elapsed from time t₂. In a case in which the course 200 includes curves, as in the present embodiment, the travel direction of the vehicle 1 changes according to the position of the vehicle 1. As illustrated in FIG. 5, the travel direction of the vehicle 1 during normal travel is the front, and the direction opposite to the front is the rear. As for the directions perpendicular to the front and rear of the vehicle 1, the right side of the vehicle 1 during normal travel is to the right, and the opposite direction from the right is the left. The right direction and the left direction are sometimes collectively referred to below as the left-right direction. The terms travel direction, front, and left-right direction may also be used to describe positional relationships.

In the example in FIG. 5, the positions of the vehicle 1 (travel path SP) at times t₁, t₂, and t₃ are indicated by SP(t₁), SP(t₂) and SP(t₃), respectively. At time t₁, the vehicle controller 10 controls the steering angle and acceleration/deceleration to return the vehicle 1 from the position of SP(t₁) to the reference path RP, thus defining the target path TP(t₁). The vehicle 1 is then controlled by the vehicle controller 10 so as to move along the target path TP(t₁). Similarly, at times t₂, t₃, the vehicle controller 10 controls the steering angle and acceleration/deceleration to return the vehicle 1 from the positions of SP(t₂), SP(t₃) to the reference path RP, thus defining the target paths TP(t₂), TP(t₃).

Here, the target path TP can be divided into at least three regions depending on the ease of observing the followability of the tires 7 with respect to the steering. Taking the target path TP(t₁) in FIG. 5 as an example, TP(t₁) includes three regions indicated as A, B, and C.

The region A is the region closest to SP(t₁). In the region A, the changes related to the orientation and rotation of the tires 7 as a result of steering at time t₁ are insufficient, and the effect of the inertia of the vehicle 1 up to that point is significant. Therefore, the positional deviation between the region A of the target path TP(t₁) and the travel path SP of the vehicle 1 is highly influenced by factors other than the followability of the tires 7. Evaluation using the region A is therefore not suitable for evaluation of the tires 7.

The region B is a region in the front following the region A and is the region of instantaneous movement after the change in the tires 7 due to the steering at time t₁. In other words, the region B is the region where the cornering force produced by the steering at time t₁ is realized. Therefore, the positional deviation between the region B of the target path TP(t₁) and the travel path SP of the vehicle 1 decreases if the followability performance of the tires 7 is high and increases if the performance is low. In other words, evaluation using the region B is suitable for evaluation of the tires 7.

The region C is a region in the front following the region B. The region C is affected not only by the steering at time t₁, but also by an overall combination of factors such as the acceleration/deceleration, the inertia of the vehicle 1, and the specifications of the road surface being traversed. Therefore, the positional deviation between the region C of TP(t₁) and the travel path SP of the vehicle 1 includes numerous effects from factors other than the followability of the tires 7, making it difficult to isolate only the effect based on followability. It may also be the case that before the vehicle 1 reaches the end of the region of C, the vehicle controller 10 defines a new target path TP(t₂), and the control of the vehicle 1 shifts to control based on the target path TP(t₂). Evaluation using the region C is therefore not suitable for evaluation of the tires 7.

The tire evaluation apparatus 100 can extract the aforementioned region B as the specific region SR of the target path TP, calculate the positional deviation between the specific region SR and the travel path SP of the vehicle 1, and evaluate the tires 7 based on the calculated positional deviation. Here, the positional deviation is calculated as the distance (dp in FIG. 5) in the left-right direction between the specific region SR and a position of the vehicle 1 (travel path SP) included in the range of the specific region SR in the direction of travel. In other words, the position of the vehicle 1 (travel path SP) used to calculate the positional deviation is located in a direction perpendicular to the travel direction of the vehicle 1 with respect to the specific region SR. The tire evaluation apparatus 100 calculates the positional deviation in the left-right direction by excluding the effects of acceleration, for example, which has a large effect in the direction of travel. The positional deviation calculated in this way better indicates the followability of the tires 7.

The travel path SP is illustrated as a set of discrete positions of the vehicle 1, but since the specific region SR has a width in the direction of travel, the specific region SR can be compared to any of the positions of the vehicle 1. In a case in which the positional deviation between the specific region SR and the travel path SP is small, the tire evaluation apparatus 100 can assign a high evaluation to the control followability of the tires 7 with respect to the vehicle 1. The tire evaluation apparatus 100 may use one or more thresholds and rank the magnitude of the control followability of the tires 7 with respect to the vehicle 1 by comparing the positional deviation to the thresholds.

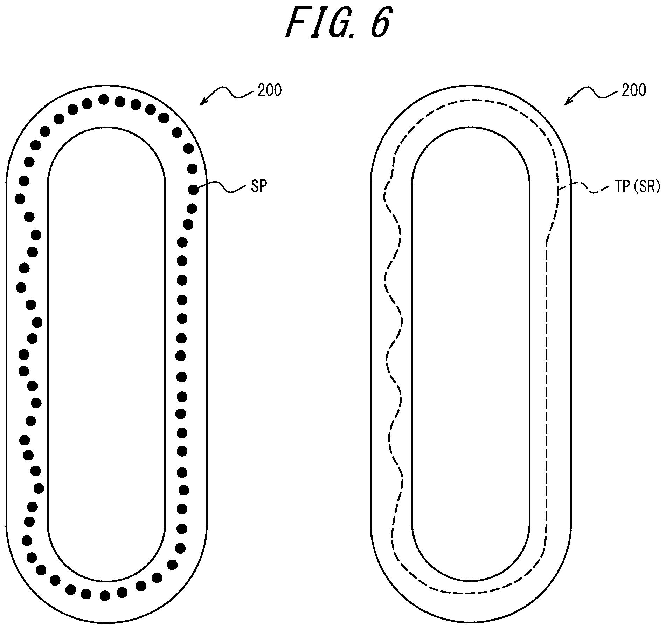

Here, a plurality of positional deviations between the specific region SR and the travel path SP may be calculated. FIG. 6 is a diagram illustrating travel paths SP of the vehicle 1 and specific regions SR in the target path TP. The tire evaluation apparatus 100 may map a plurality of specific regions SR extracted from a plurality of target paths TP to the map information for the course 200, as illustrated on the right side of FIG. 6. For each of the specific regions SR, the positional deviation from the corresponding position of the vehicle 1 (travel path SP) may be calculated. The tire evaluation apparatus 100 may average the resulting plurality of positional deviations and evaluate the tires 7 using the mean value.

In a case in which the course 200 is a circuit course, as in the present embodiment, the positional deviation is preferably calculated using the specific region SR and the travel path SP of the vehicle 1 in one lap. This is because, for example, a more appropriate evaluation of the tires 7 can be performed during driving on a circuit course, on which the effect of the followability of the tires 7 is more evident than on a straight course.

As described above, the tire evaluation apparatus 100 evaluates the tires 7 by extracting the aforementioned region B as the specific region SR. However, the specific region SR can vary depending on the speed of the vehicle 1 and other factors. The tire evaluation apparatus 100 may define the specific region SR as a distance range in a case in which the vehicle 1 travels at a nearly constant speed on the test course 200, as in the present embodiment. In greater detail, the tire evaluation apparatus 100 may define the specific region SR as a distance range, based on the speed of the vehicle 1, from the starting point of the target path TP. For example, in a case in which the speed of the vehicle 1 is approximately 60 km/h, the distance range of the specific region SR in the travel direction may be 10 - α [m] to 10 + α [m] from the starting point of the target path TP. The value of α may be determined based on the timing at which the on-board sensor 9 detects the position of the vehicle 1 so that the position of the vehicle 1 is included in the range of the specific region SR in the travel direction during the calculation of the positional deviation. This distance may vary with the speed of the vehicle 1. In this way, the tire evaluation apparatus 100 can determine a region (specific region SR) that indicates the movement of the vehicle 1 immediately after the direction of the tires 7 is changed by the steering operation of the vehicle 1.

As another example, the tire evaluation apparatus 100 may define the specific region SR as a region into which the target path TP is divided. The tire evaluation apparatus 100 divides the target path TP into three or more regions. The target path TP may be divided equally or unequally. Among the divided target path TP regions, the region closest to the starting point of the target path TP corresponds to the region A in FIG. 5. The tire evaluation apparatus 100 can therefore determine the specific region SR using the regions excluding the divided region closest to the starting point of the target path TP (corresponding to the region A). When determining the specific region SR, the tire evaluation apparatus 100 also excludes the divided region that is far from the starting point of the target path TP (corresponding to the region C). In the closest divided region, the positional deviation from the travel path SP of the vehicle 1 is highly influenced by factors other than the followability of the tires 7. The divided region closest to the starting point of the target path TP is affected by the time delay of the vehicle behavior, for example. Evaluation using this region is therefore not suitable for evaluation of the tires 7. As for the divided region far from the starting point of the target path TP, the vehicle controller 10 may define a new target path TP before the vehicle 1 reaches the end of this region, and the control of the vehicle 1 may shift to control based on the new target path TP. Evaluation using this region is therefore not suitable for evaluation of the tires 7. In the specific region SR, the positional deviation from the travel path SP of the vehicle 1 decreases if the followability performance of the tires 7 is high and increases if the performance is low. In other words, evaluation using the specific region is suitable for evaluation of the tires 7. The tire evaluation apparatus 100 may define the second closest divided region from the starting point of the target path TP as the specific region SR. In other words, from the starting point of the target path TP, the specific region SR may be defined as the region divided next after a region affected by the time delay in the vehicle behavior. The tire evaluation apparatus 100 can easily define the specific region SR by the method of dividing the target path TP.

The tire evaluation apparatus 100 may calculate the range of the specific region SR using the data on speed acquired from the vehicle 1. For example, assuming that the specific region SR corresponds to a range in which the vehicle 1 travels after a predetermined time from the steering operation of the vehicle 1, the tire evaluation apparatus 100 may calculate the range of the specific region SR based on the speed of the vehicle 1 and the predetermined time. Here, the specific region SR may be determined based on the steering input speed of the vehicle 1. The steering input speed is preferably used because the target range may change between slow and rapid steering inputs. In this case, the tire evaluation apparatus 100 can accurately determine the specific region SR even when the vehicle 1 is traveling at varying speeds.

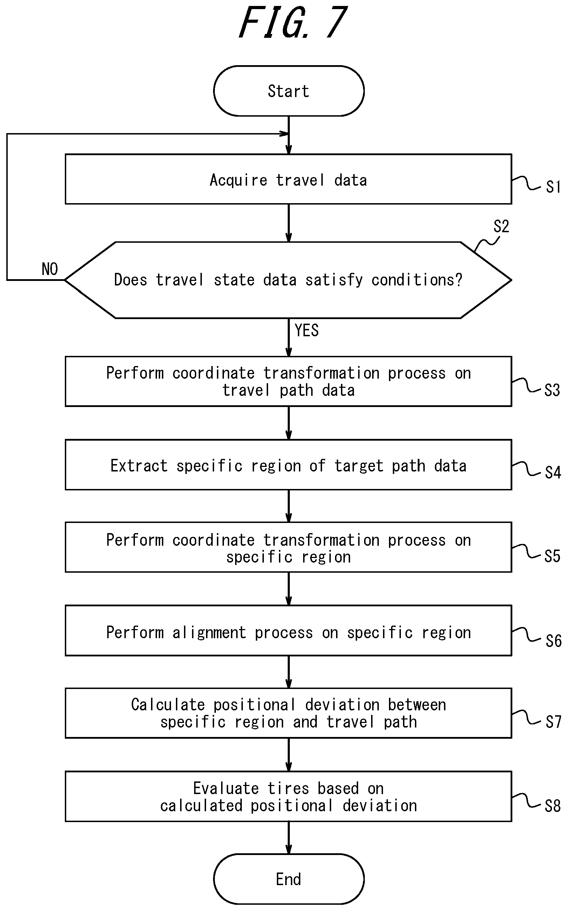

FIG. 7 is a flowchart illustrating an example of processing in a tire evaluation method according to an embodiment of the present disclosure. By executing the process according to the flowchart in FIG. 7, the tire evaluation apparatus 100 can evaluate the followability of the tires 7 with respect to vehicle control.

The acquisition interface 111 acquires travel data from the vehicle 1 (step S1). The travel data includes the travel state data, travel path SP data, and target path TP data. In the present embodiment, the travel data are a plurality of time-series data points stored in the vehicle memory 11 while the vehicle 1 travels at least one lap around the course 200. The acquisition interface 111 may, however, acquire the travel data in real time from the vehicle 1 traveling around the course 200. The acquisition interface 111 may also acquire one point of travel data, rather than a plurality of points.

The travel state data includes the speed and acceleration of the vehicle 1, as described above. The driving path SP data is data indicating the actual travel position of the vehicle 1 as detected by the on-board sensor 9. The target path TP data is data indicating the path of the vehicle 1 set by the vehicle controller 10 for the vehicle 1 to travel towards the reference path RP.

The acquisition interface 111 selects the travel data. Specifically, the acquisition interface 111 selects the travel data for use in a case in which the travel state data satisfies a condition (step S2: Yes). In a case in which the travel state data does not satisfy the condition, the acquisition interface 111 does not use that travel data but rather returns to the process in step S1 to acquire the next travel data (step S2: No). In the present embodiment, the travel state data satisfies the condition in a case in which the speed of the vehicle 1 is in a first range and the acceleration of the vehicle 1 in the left-right direction is in a second range. The first range is a narrow speed range, such as 57 km/h to 63 km/h, in which the vehicle 1 can be treated as being at a nearly constant speed. The second range is a wide acceleration range, such as -0.5 G to +0.5 G, in which the vehicle 1 is assumed to traverse various curves. G indicates gravitational acceleration. By having the acquisition interface 111 select the travel data under the aforementioned conditions, the evaluation can be performed using only travel data that is greatly affected by the response of the tires 7.

The specific region extractor 112 executes a coordinate transformation process on the travel path SP data as a preprocessing step (step S3). The coordinate conversion process is a process of converting the coordinates of the travel path SP data into coordinates of a Cartesian coordinate system having a coordinate axis from the starting point of the vehicle 1 toward the front in the travel direction and a coordinate axis in the left-right direction. This coordinate transformation process avoids problems such as overlapping coordinates caused by the course 200 being a circuit course.

The specific region extractor 112 extracts the specific region SR of the target path TP data (step S4). The extracted specific region SR may be mapped to the map information for the course 200, for example, as illustrated on the right side in FIG. 6.

As in step S3, the specific region extractor 112 executes a coordinate transformation process on the specific region SR (step S5). Through this coordinate transformation process, the coordinates of the specific region SR are transformed to the same coordinate system as the travel path SP to enable comparison.

The specific region extractor 112 may further perform an alignment process on the specific region SR (step S6). In the case of a plurality of specific regions SR, the alignment process is a process to arrange the specific regions SR in order from the starting point of the vehicle 1. Also, in a case in which a plurality of specific regions SR exist at a certain position in the travel direction from the starting point of the vehicle 1, the alignment process may include a process to calculate the coordinates by averaging the specific regions SR. For example, the alignment process may be performed in a case in which the vehicle 1 completes two or more laps of the course 200 and the tire evaluation apparatus 100 evaluate the tires 7 after collectively acquiring the resulting travel data. By the travel data obtained over a plurality of laps being aligned and averaged, the effects of errors and the like can be reduced, and a highly reliable evaluation of the tires 7 can be performed.

The positional deviation calculator 113 calculates the positional deviation between the specific region SR and the travel path SP (step S7). The positional deviation calculator 113 extracts the position of the vehicle 1 (travel path SP) included in the range in the travel direction of the specific region SR. The positional deviation calculator 113 then calculates the distance between the extracted travel path SP and the specific region SR in the left-right direction as the positional deviation. In the case of a plurality of specific regions SR, the positional deviation calculator 113 calculates the positional deviation for each specific region SR.

The evaluator 114 evaluates the control followability of the tires 7 with respect to the vehicle 1 based on the positional deviation calculated by the positional deviation calculator 113 (step S8). As the positional deviation is smaller, the control followability of the tires 7 with respect to the vehicle 1 can be evaluated higher. In the case of a plurality of specific regions SR, the evaluator 114 may perform the evaluation based on a mean value or a median value obtained by statistical processing. The evaluator 114 may perform ranking or the like by comparing the value of the positional deviation with a threshold. The evaluator 114 may display the evaluation result on a display apparatus or the like via the communication interface 101. The user (for example, the operation manager of the vehicle 1) can determine whether to continue using or to change the mounted tires 7 based on the displayed evaluation results.

As described above, the tire evaluation apparatus 100 and the tire evaluation method according to the present embodiment can evaluate the followability of the tire 7 with respect to the vehicle control by the aforementioned configuration and processes. Here, as long as data on the target path TP and the like are obtained, the tire evaluation apparatus 100 and the tire evaluation method according to the present embodiment can evaluate the control followability of the tires 7 with respect to the vehicle 1 without requiring details on the autonomous driving control. Therefore, the followability of the tires 7 can be properly evaluated even for the vehicle 1 that performs autonomous driving using a model other than the aforementioned forward fixation model, or autonomous driving for which the timing of acceleration/deceleration is not available as information, for example.

Although embodiments of the present disclosure have been described based on the drawings and examples, it is to be noted that various changes or modifications will be apparent to those skilled in the art based on the present disclosure. Therefore, such changes or modifications are to be understood as included within the scope of the present disclosure. For example, the functions and the like included in the components, steps (processes), and the like may be reordered in any logically consistent way, and components, steps, and the like may be combined into one or divided. An embodiment of the present disclosure can also be realized as a program to be executed by a processor provided in an apparatus or as a storage medium with a program recorded thereon. Such embodiments are also to be understood as included within the scope of the present disclosure.

In the present embodiment, the tire evaluation apparatus 100 has been described as evaluating the tires 7 as part of a tire test, but the tire evaluation apparatus 100 may be used to determine the suitability of the tires 7 for autonomous vehicles in general. For example, the vehicle 1 that performs autonomous driving may be a public transportation vehicle, such as a bus, that travels a predetermined route on a public road, rather than the course 200. A tire 7 suitable for autonomous vehicles in public transportation may be selected based on the evaluation by the tire evaluation apparatus 100.

In the present embodiment, the tire evaluation apparatus 100 acquires the target path TP data from the vehicle 1, but the tire evaluation apparatus 100 may instead calculate the target path TP based on the reference path RP, the travel state data, and the travel path SP data.

The configuration of the tire evaluation apparatus 100 may be freely chosen. For example, the processing executed by the tire evaluation apparatus 100, which is one computer in the above embodiment, may be executed by distributed processing among a plurality of computers.

### REFERENCE SIGNS LIST

- 1: Vehicle
- 2: Engine
- 3: Power transmission device
- 4: Steering device
- 5: Braking device
- 7: Tire
- 8: Vehicle communication interface
- 9: On-board sensor
- 10: Vehicle controller
- 11: Vehicle memory
- 12: Battery
- 13: Autonomous driving processor
- 100: Tire evaluation apparatus
- 101: Communication interface
- 102: Memory
- 103: Controller
- 111: Acquisition interface
- 112: Specific region extractor
- 113: Positional deviation calculator
- 114: Evaluator
- 200: Course
- 200a, 200b: Straight track
- 200c, 200d: Curved track
- 210: Test section
- 220: Adjustment section
- 230: Banked section
- 240: Acceleration section
- 300: Tire evaluation system

## Claims

1. A tire evaluation method for evaluating a tire (7) mounted on a vehicle (1) traveling by autonomous driving on a course (200) with a defined reference path (RP), the tire evaluation method comprising:
acquiring data on a travel path (SP) of the vehicle (1) and data on a target path (TP) set during travel so that the vehicle (1) passes through the reference path (RP);
extracting a specific region from the data on the target path (TP);
calculating a positional deviation between the specific region and the travel path (SP) of the vehicle (1); and
evaluating a control followability of the tire (7) which is the matching between the controlled vehicle (1) and the tire (7) based on the positional deviation, wherein
the target path (TP) is set based on a control of steering angle by a vehicle controller (10) that controls behavior of the vehicle (1) for autonomous driving.

2. The tire evaluation method according to claim 1, wherein the specific region is determined as a distance range based on a speed of the vehicle (1) from a starting point of the target path (TP) in a travel direction of the vehicle (1).

3. The tire evaluation method according to claim 1, wherein the target path (TP) is divided into at least three regions, and the specific region is defined as a region where cornering force produced by steering at a starting point of the target path (TP) is realized.

4. The tire evaluation method according to claim 1, wherein the specific region is determined based on a steering input speed of the vehicle (1).

5. The tire evaluation method according to any one of claims 2 to 4, wherein the travel path (SP) of the vehicle (1) used to calculate the positional deviation is located in a direction perpendicular to the travel direction of the vehicle (1) with respect to the specific region.

6. A tire evaluation apparatus (100) for evaluating a tire (7) mounted on a vehicle (1) traveling by autonomous driving on a course (200) with a defined reference path (RP), the tire evaluation apparatus (100) comprising:
an acquisition interface (111) configured to acquire data on a travel path of the vehicle (1) and data on a target path (TP) set during travel so that the vehicle (1) passes through the reference path (RP);
a specific region extractor (112) configured to extract a specific region from the data on the target path (TP);
a positional deviation calculator (113) configured to calculate a positional deviation between the specific region and the travel path (SP) of the vehicle (1); and
an evaluator (114) configured to evaluate a control followability of the tire (7) which is the matching between the controlled vehicle (1) and the tire (7) based on the positional deviation, wherein
the target path (TP) is set based on a control of steering angle by a vehicle controller (10) that controls behavior of the vehicle (1) for autonomous driving.

## Patentansprüche

1. Reifenbeurteilungsverfahren zur Beurteilung eines Reifens (7), der an einem Fahrzeug (1) montiert ist, das autonom auf einer Strecke (200) mit einem definierten Referenzweg (RP) fährt, wobei das Reifenbeurteilungsverfahren umfasst:
Erfassen von Daten über einen Fahrweg (SP) des Fahrzeugs (1) und von Daten über einen Zielweg (TP), der während der Fahrt so festgelegt wird, dass das Fahrzeug (1) den Referenzweg (RP) durchfährt;
Extrahieren eines spezifischen Bereichs aus den Daten auf dem Zielweg (TP);
Berechnen einer Positionsabweichung zwischen dem spezifischen Bereich und dem Fahrweg (SP) des Fahrzeugs (1); und
Beurteilen einer Kontrolle der Spurtreue des Reifens (7), die die Übereinstimmung zwischen dem gesteuerten Fahrzeug (1) und dem Reifen (7) basierend auf der Positionsabweichung ist, wobei
der Zielweg (TP) basierend auf einer Steuerung des Lenkwinkels durch eine Fahrzeugsteuereinheit (10) festgelegt wird, die Verhalten des Fahrzeugs (1) für autonomes Fahren steuert.

2. Reifenbeurteilungsverfahren nach Anspruch 1, wobei der spezifische Bereich als ein Entfernungsbereich bestimmt wird, der auf einer Geschwindigkeit des Fahrzeugs (1) von einem Startpunkt des Zielwegs (TP) in einer Fahrtrichtung des Fahrzeugs (1) basiert.

3. Reifenbeurteilungsverfahren nach Anspruch 1, wobei der Zielweg (TP) in mindestens drei Bereiche unterteilt ist und der spezifische Bereich als ein Bereich definiert ist, in dem durch Lenken an einem Startpunkt des Zielwegs (TP) Spurhaltungskraft erzeugt wird.

4. Reifenbeurteilungsverfahren nach Anspruch 1, wobei der spezifische Bereich basierend auf einer Lenkeingabegeschwindigkeit des Fahrzeugs (1) bestimmt wird.

5. Reifenbeurteilungsverfahren nach einem der Ansprüche 2 bis 4, wobei der Fahrweg (SP) des Fahrzeugs (1), der zum Berechnen der Positionsabweichung verwendet wird, in einer Richtung senkrecht zur Fahrtrichtung des Fahrzeugs (1) in Bezug auf den spezifischen Bereich gelegen ist.

6. Reifenbeurteilungseinrichtung (100) zur Beurteilung eines Reifens (7), der an einem Fahrzeug (1) montiert ist, das autonom auf einer Strecke (200) mit einem definierten Referenzweg (RP) fährt, wobei die Reifenbeurteilungseinrichtung (100) umfasst:
eine Erfassungsschnittstelle (111), die so konfiguriert ist, dass sie Daten über einen Fahrweg des Fahrzeugs (1) und Daten über einen Zielweg (TP) erfasst, der während Fahrt so festgelegt wird, dass das Fahrzeug (1) den Referenzweg (RP) durchfährt;
einen Extraktor eines spezifischer Bereichs (112), der so konfiguriert ist, dass er einen spezifischen Bereich aus den Daten auf dem Zielweg (TP) extrahiert;
einen Positionsabweichungsrechner (113), der so konfiguriert ist, dass er eine Positionsabweichung zwischen dem spezifischen Bereich und dem Fahrweg (SP) des Fahrzeugs (1) berechnet; und
einen Beurteiler (114), der so konfiguriert ist, dass er eine Kontrolle der Spurtreue des Reifens (7) beurteilt, die die Übereinstimmung zwischen dem gesteuerten Fahrzeug (1) und dem Reifen (7) basierend auf der Positionsabweichung ist, wobei
der Zielweg (TP) basierend auf einer Steuerung des Lenkwinkels durch eine Fahrzeugsteuereinheit (10) festgelegt wird, die Verhalten des Fahrzeugs (1) für autonomes Fahren steuert.

## Revendications

1. Procédé d'évaluation de pneu pour évaluer un pneu (7) monté sur un véhicule (1) se déplaçant en conduite autonome sur une trajectoire (200) avec un trajet de référence défini (RP), le procédé d'évaluation de pneu comprenant les étapes consistant à :
acquérir des données sur un trajet de déplacement (SP) du véhicule (1) et des données sur un trajet cible (TP) défini pendant le déplacement de sorte que le véhicule (1) passe par le trajet de référence (RP) ;
extraire une région spécifique des données sur le trajet cible (TP) ;
calculer un écart de position entre la région spécifique et le trajet de déplacement (SP) du véhicule (1) ; et
évaluer une capacité de suivi de commande du pneu (7), qui est la correspondance entre le véhicule commandé (1) et le pneu (7) sur la base de l'écart de position, dans lequel
le trajet cible (TP) est défini sur la base d'une commande de l'angle de braquage par un dispositif de commande de véhicule (10) qui commande un comportement du véhicule (1) pour une conduite autonome.

2. Procédé d'évaluation de pneu selon la revendication 1, dans lequel la région spécifique est déterminée comme une plage de distance sur la base d'une vitesse du véhicule (1) à partir d'un point de départ du trajet cible (TP) dans une direction de déplacement du véhicule (1).

3. Procédé d'évaluation de pneu selon la revendication 1, dans lequel le trajet cible (TP) est divisé en au moins trois régions, et la région spécifique est définie comme une région dans laquelle une force de virage produite par la direction à un point de départ du trajet cible (TP) est réalisée.

4. Procédé d'évaluation de pneu selon la revendication 1, dans lequel la région spécifique est déterminée sur la base d'une vitesse d'entrée de direction du véhicule (1).

5. Procédé d'évaluation de pneu selon l'une quelconque des revendications 2 à 4, dans lequel le trajet de déplacement (SP) du véhicule (1) utilisé pour calculer l'écart de position est situé dans une direction perpendiculaire à la direction de déplacement du véhicule (1) par rapport à la région spécifique.

6. Appareil d'évaluation de pneu (100) pour évaluer un pneu (7) monté sur un véhicule (1) se déplaçant en conduite autonome sur une trajectoire (200) avec un trajet de référence défini (RP), l'appareil d'évaluation de pneu (100) comprenant :
une interface d'acquisition (111) configurée pour acquérir des données sur un trajet de déplacement du véhicule (1) et des données sur un trajet cible (TP) défini pendant le déplacement de sorte que le véhicule (1) passe par le trajet de référence (RP) ;
un extracteur de région spécifique (112) configuré pour extraire une région spécifique des données sur le trajet cible (TP) ;
un calculateur d'écart de position (113) configuré pour calculer un écart de position entre la région spécifique et le trajet de déplacement (SP) du véhicule (1) ; et
un évaluateur (114) configuré pour évaluer la capacité de suivi de commande du pneu (7), qui est la correspondance entre le véhicule commandé (1) et le pneu (7) sur la base de l'écart de position, dans lequel
le trajet cible (TP) est défini sur la base d'une commande de l'angle de braquage par un dispositif de commande de véhicule (10) qui commande un comportement du véhicule (1) pour une conduite autonome.
